# EUROPEAN PATENT SPECIFICATION

(11) **EP 1 551 106 B1**
(45) Date of publication and mention of the grant of the patent: **13.04.2011**
(21) Application number: 04030897.5
(22) Date of filing: 28.12.2004
(51) Int. Cl.: H04B 1/38, H05K 9/00

(54) **RF module structure of mobile communication terminal**
RF-Modul für ein Mobilkommunikationsendgerät
Module radiofréquence d'un système de téléphonie mobile

(30) Priority: 30.12.2003 KR 2003100748
(43) Date of publication of application: 06.07.2005
(73) Proprietor: LG ELECTRONICS INC., Yeongdeungpo-gu Seoul 150-721 (KR)
(72) Inventor: Choi, Cheal-Hoon, Seoul (KR)
(74) Representative: Katérle, Axel

(56) References cited:
- WO-A-00/45420
- JP-A- 2001 177 433
- US-A1- 2002 049 042

## Description

### BACKGROUND OF THE INVENTION

### 1. Field of the Invention

The present invention relates to a mobile communication terminal, and particularly, to an RF multi-chip module of a mobile communication terminal.

### 2. Description of the Background Art

WO 00/45420 discloses a multiple chip module (MCM) for use with baseband, IF (intermediate frequency) or RF (radio frequency) applications. The MCM comprises a substrate, a number of active circuit chips having a plurality of different functions and mounted on the substrate, discrete components mounted to the substrate using surface mount techniques, all configured to provide an integrated subsystem in a single MCM package. The MCM accommodates the presence of a plurality of RF functions by providing a sufficient amount of RF isolation between the different RF elements even though the actual MCM size is relatively small.

US 2002/0049042 A1 discloses an RF module comprising a multi-layered substrate having an upper surface and a lower surface opposite to the upper surface, a base-band IC (integrated circuit), a memory IC, a quartz oscillator and a plurality of surface-mounted component mounted on the upper surface, a cavity formed in the lower surface, and a first RF-IC and a second RF-IC disposed in the cavity. The first and second RF-IC may be covered with a resin arranged to fill the cavity, or a metallic cap fixed to the substrate to seal the cavity.

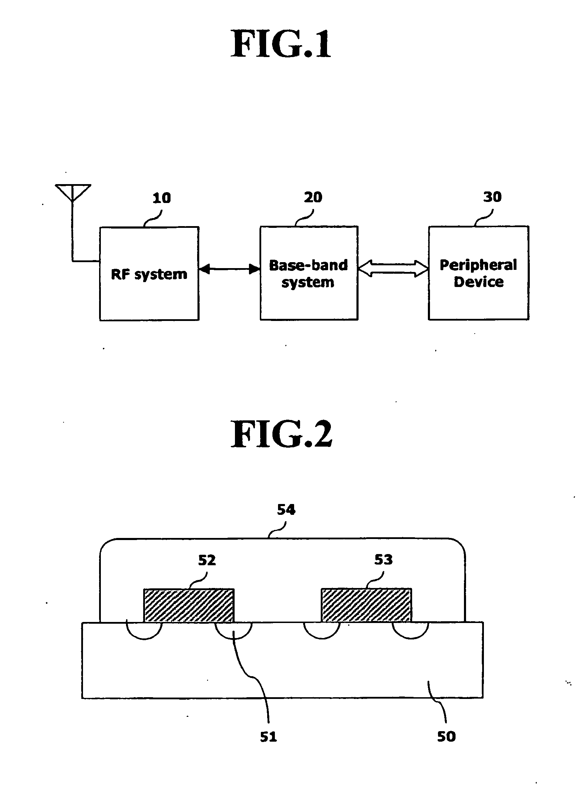

Figure 1 is a configuration view of a general mobile communication terminal.

Referring to Figure 1, a mobile communication terminal includes an RF (Radio Frequency) system 10, a base-band system 20 and an additional device 30.

The RF system 10 includes an antenna, a transmission unit, a reception unit and a local oscillator (LO), and the base-band system 20 includes an MSM (Mobile Station Modem) chip corresponding to a CPU (Central Processing Unit) of a computer; a memory and peripheral devices.

The additional device 30 is a part for provding a user with an output signal of the base-band system 20 or transmitting a signal inputted by a user to the base-band system 20 and generally includes a speaker, a microphone, a keypad, an LCD, a camera and the like.

In order to achieve miniaturization and improve transmission/reception performance by eliminating signal interference, the RF system 10 and the base-band system 20 are integrated on one board.

However, for a terminal according to the related art, since the RF system and the base-band system are integrated on one board, according to an area having a different frequency band (range), the RF system has to be re-designed to correspond to a frequency range of the corresponding area. That is, the related art is disadvantageous in that a board has to be individually designed when a frequency band (PCS, CDMA, AMPS) is different, even though the base band chipset is the same.

### SUMMARY OF THE INVENTION

Therefore, an object of the present invention is to provide an RF multi-chip module (RF MCM) obtained by separately modularizing the RF part of a mobile communication terminal which includes an RF part and a base-band part.

Another object of the present invention is to provide an RF module structure of a mobile communication terminal allowing an RF board to be easily replaced according to the desired frequency band to be used.

To achieve these and other advantages and in accordance with the purpose of the invention, as embodied and broadly described herein, there is provided a mobile communication terminal operable at a radio frequency band comprising:
a modular radio frequency multi-chip module (RF MCM) comprising:
   a board,
   a plurality of radio frequency (RF) components mounted on the board, and
   a cap for isolating the RF components from the exterior environment for blocking unwanted wave interference from the outside; and
a base-band part to which the RF MCM is interconnected,
wherein the RF MCM is selected based on the frequency band and is replaceable such that the RF MCM can be replaced without replacing the base-band part, and
wherein each of the RF components either comprises a bare-die state component such that the RF MCM is modularized via wire-bonding of the bare-die state component of each of the RF components or a modular RF component such that the RF MCM is modularized via soldering of the modular RF component of each of the RF components.

Preferably, the RF MCM is implemented in one of a lead free type, a lead type and a connector type.

Preferably, the board can be implemented by a low temperature co-fired ceramic (LTCC) and a high temperature co-fired ceramic (HTCC) which are types of ceramic laminated boards and general FR4 PCB laminated board.

Preferably, the cap is formed by epoxy molding or shield metal.

Preferably, each RF component is a component in a bare-die state and is wire-bonded on the board. In addition, each RF component is a modularized component and is soldered on the board.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a schematic configuration view of a general mobile communication terminal;
Figure 2 is a sectional view of an RF MCM in accordance with an embodiment of the present invention; and
Figure 3 is a view showing different connection terminal types of an RF MCM according to the present invention.

Reference will now be made in detail to embodiments of the present invention, examples of which are illustrated in the accompanying drawings.

In the related art, an RF board has to be individually designed according to a frequency (PCSs, CDMA and Tri-Mode) even though a base-band chipset is the same in fabricating a mobile communication terminal. The present invention proposes an RF Multi-Chip Module (MCM) obtained by separately modularizing the RF part of a mobile communication terminal which includes an RF part and a base-band part. That is, in the present invention, the RF system of a mobile communication terminal is integrated into one chip.

Accordingly, with the present invention, a base-band part is commonly used according to a chipset and then a proper RF MCM is replaceably inserted thereto according to the frequency used in the specific area, so that a terminal can be easily fabricated in a short amount of time without the need for designing a new RF board.

Figure 2 is a sectional view of an RF MCM in accordance with an embodiment of the present invention.

As shown therein, the RF MCM in accordance with the present invention includes a plurality of wires formed at an upper surface of a board 50, for allowing signals to be transferred; a transmission unit 52 and a reception unit 53 separately mounted on the board 50; and a cap 54 for isolating the transmission unit 52 and the reception unit 53 from the exterior environment.

Preferably, the board 50 is formed by a low temperature co-fired ceramic (LTCC) and a high temperature co-fired ceramic (HTCC) which are types of ceramic laminated boards and general FR4 PCB laminated board (two-sided Epoxy), and the cap 30 is implemented by using epoxy molding or shield metal.

The RF MCM in accordance with the present invention will now be described in detail.

The FR-4 used as a multi-layer board is used as a material of the board 50 for the RF MCM, and wires for mounting a chip on the board 50, that is, wires 51 for separately mounting a transmission unit 52 and a reception unit 53 are formed on the board.

In addition, for the board 50, LTCC formed by laminating ceramic sheets may be used. The LTCC is a kind of ceramic board formed by laminating ceramic sheets. Since a dielectric constant of the LTCC is nearly twice as high as that of FR-4, the size of the board can be reduced. In addition, since the LTCC has good heat conductivity, the large amount of heat generated by a PAM (Power Amplifier Module) can be efficiently released, whereby the cooling effect which reduces the temperature of the mobile terminal itself.

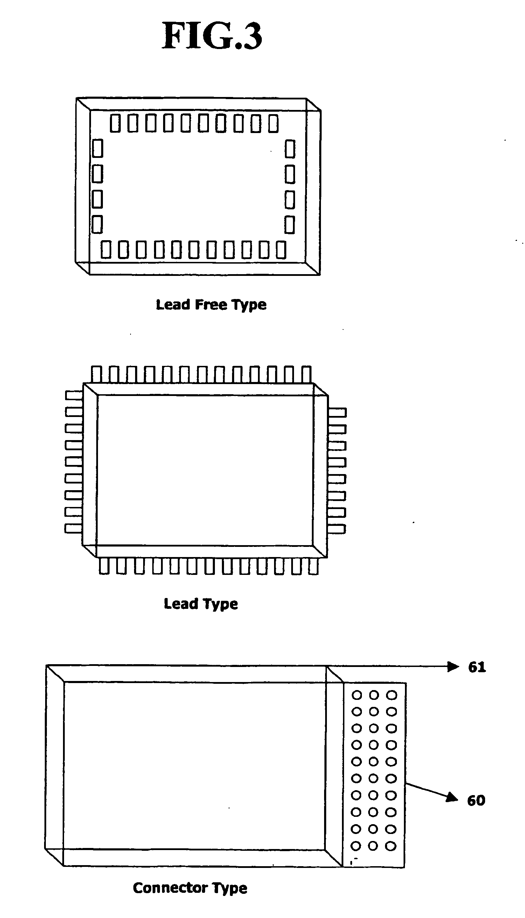

And, as shown in Figure 3, the RF MCM is divided into a lead free type and a lead type according to the type of pins, whereby other types of connectors instead of pins may also be used. Particularly, reference number 60 is a connector in a connector type RF MCM and reference number 61 is a cap.

With the present invention, an RF system can be implemented into an RF MCM by mounting the components on a board 50 having the above mentioned characteristics using various mounting methods. Here, it is assumed that an operation of the RF MCM is the same as that of the RF system, and a board 50 used for the RF MCM is made of LTCC.

In a first method, each component in a bare-die state is wire-bonded to the LTCC to fabricate an RF MCM. That is, a transmission unit 52 and a reception unit 53 are positioned along the wires 51 of the board 50, and then wire-bonding is performed, to thereby fabricate an RF MCM.

In a second method, components which have already been modularized are soldered to the LTCC, to thereby fabricate an RF MCM. In other words, a transmission unit 52 and a reception unit 53 which have already been modularized are respectively positioned along the wires 51 and then are soldered, to thereby fabricate an RF MCM.

Once the transmission unit 52 and the reception unit 53 are mounted on the board 50 by using such methods, that is, once the RF MCM has been fabricated, the RF MCM is covered with a cap 54 so as to be isolated from the exterior environment. In this case, the cap 54 of the RF MCM is fabricated by a method of epoxy molding such as an IC package, or by covering the board with a shield can (metal) to block unwanted wave interference from the outside, and increasing ESD and GND effects.

As so far described, in the present invention, only the RF part is separately modularized in a mobile communication terminal including an RF part and a base-band part. Accordingly, a base-band part is commonly used and then only the RF module is replaced for PCS, CDMA, Tri-Mode or the like which employ different frequencies, thereby providing a smooth communication service in various frequency band.

In the present invention, by providing an RF MCM obtained by separately modularizing an RF part, new circuits need not be designed even in an area that uses different frequencies, thereby allowing the fabricating of a mobile terminal within a short period of time.

In addition, in the present invention, by fabricating an RF MCM using an LTCC board that is a ceramic laminated board (not a FR-4 board), the size of the board may be reduced, and also the generated heat of the board is effectively released, so that there can be a cooling effect that lowers the temperature of the mobile terminal itself.

## Claims

1. A mobile communication terminal operable at a radio frequency band comprising:
a modular radio frequency multi-chip module (RF MCM) comprising:
a board (50),
a plurality of radio frequency (RF) components (52, 53) mounted on the board (50), and
a cap (54) for isolating the RF components from the exterior environment for blocking unwanted wave interference from the outside; and
a base-band part (20) to which the RF MCM is interconnected,
wherein the RF MCM is selected based on the frequency band and is replaceable such that the RF MCM can be replaced without replacing the base-band part (20), and
wherein each of the RF components (52, 53) either comprises a bare-die state component such that the RF MCM is modularized via wire-bonding (51) of the bare-die state component of each of the RF components (52, 53) or a modular RF component such that the RF MCM is modularized via soldering of the modular RF component of each of the RF component (52, 53).

2. The mobile communication terminal of claim 1, wherein the RF MCM is implemented as a lead free type module.

3. The mobile communication terminal of claim 1, wherein the RF MCM is implemented as a lead type of module.

4. The mobile communication terminal of claim 1, wherein the RF MCM is implemented as a connector (60) type of module.

5. The mobile communication terminal of claim 1, wherein the board (50) is a ceramic laminated board.

6. The mobile communication terminal of claim 5, wherein the ceramic laminated board (50) comprises multiple layers of an FR-4 type material.

7. The mobile communication terminal of claim 5, wherein the ceramic laminated board comprises a low temperature, co-fired ceramic material formed of laminated ceramic sheets.

8. The mobile communication terminal of claim 5, wherein the ceramic laminated board comprises a high temperature, co-fired ceramic material formed of laminated ceramic sheets.

9. The mobile communication terminal of claim 1, wherein the cap (54) is formed by one of an epoxy molding or a metal shield.

## Patentansprüche

1. Mobiles Kommunikationsendgerät, das in einem Hochfrequenzband betrieben werden kann, umfassend:
ein modulares Hochfrequenz-Mehrchipmodul, kurz HF MCM, mit einer Platine (50),
einer Mehrzahl Hochfrequenz- (HF) Komponenten (52, 53), die auf der Platine (50) installiert sind, und einer Kappe (54) zum Isolieren der HF-Komponenten gegenüber der äußeren Umgebung, um unerwünschte Wellenstörungen von außen zu blockieren; und
einen Basisbandteil (20), mit dem das HF MCM verbunden ist,
wobei das HF MCM auf Basis des Frequenzbandes gewählt ist und so austauschbar ist, dass das HF MCM ausgetauscht werden kann, ohne den Basisbandteil (20) auszutauschen, und
wobei jede der HF-Komponenten (52, 53) eine Nacktchip-Komponente aufweist, so dass das HF MCM über Drahtbonden (51) der Nackchip-Komponente jeder der HF-Komponenten (52, 53) modularisiert wird, oder eine modulare HF-Komponente aufweist, so dass das HF MCM mittels Löten der modularen HF-Komponente jeder der HF-Komponenten (52, 53) modularisiert wird.

2. Mobiles Kommunikationsendgerät nach Anspruch 1, wobei das HF MCM als Modul vom zuleitungsfreien Typ implementiert ist.

3. Mobiles Kommunikationsendgerät nach Anspruch 1, wobei das HF MCM als Modul vom Zuleitungstyp implementiert ist.

4. Mobiles Kommunikationsendgerät nach Anspruch 1, wobei das HF MCM als Modul des Typs mit einem Verbinder (60) implementiert ist.

5. Mobiles Kommunikationsendgerät nach Anspruch 1, wobei die Platine (50) eine laminierte Keramikplatine ist.

6. Mobiles Kommunikationsendgerät nach Anspruch 5, wobei die laminierte Keramikplatine (50) mehrere Schichten aus einem FR-4-Material aufweist.

7. Mobiles Kommunikationsendgerät nach Anspruch 5, wobei die laminierte Keramikplatine ein Niedertemperatur-Einbrandkeramikmaterial aufweist, das aus laminierten Keramikfolien gebildet ist.

8. Mobiles Kommunikationsendgerät nach Anspruch 5, wobei die laminierte Keramikplatine ein Hochtemperatur-Einbrandkeramikmaterial aufweist, das aus laminierten Keramikfolien gebildet ist.

9. Mobiles Kommunikationsendgerät nach Anspruch 1, wobei die Kappe (54) von einem Expoxy-Formteil oder einer Metallabschirmung gebildet ist.

## Revendications

1. Terminal de communication mobile utilisable dans une bande de fréquences radio comprenant :
un module multipuce à fréquence radio modulaire (RF MCM) comprenant :
une carte (50),
une pluralité de composants à fréquence radio (RF) (52, 53) montés sur la carte (50), et
une coiffe (54) pour isoler les composants RF de l'environnement extérieur pour bloquer une interférence indésirable d'ondes provenant de l'extérieur ; et
une partie en bande de base (20) à laquelle le RF MCM est interconnecté,
dans lequel le RF MCM est sélectionné sur la base de la bande de fréquences et est remplaçable de telle manière que le RF MCM peut être remplacé sans remplacer la partie en bande de base (20), et
dans lequel chacun des composants RF (52, 53) comprend soit un composant à puce nue de telle sorte que le RF MCM est modularisé par l'intermédiaire d'une liaison par fil (51) du composant à puce nue de chacun des composants RF (52, 53), soit un composant RF modulaire de telle sorte que le RF MCM est modularisé par l'intermédiaire d'une soudure du composant RF modulaire de chacun des composants RF (52, 53).

2. Terminal de communication mobile selon la revendication 1, dans lequel le RF MCM est mis en oeuvre comme un type de module sans plomb.

3. Terminal de communication mobile selon la revendication 1, dans lequel le RF MCM est mis en oeuvre comme un type de module au plomb.

4. Terminal de communication mobile selon la revendication 1, dans lequel le RF MCM est mis en oeuvre comme un type de module à connecteur (60).

5. Terminal de communication mobile selon la revendication 1, dans lequel la carte (50) est une carte stratifiée en céramique.

6. Terminal de communication mobile selon la revendication 5, dans laquelle la carte stratifiée en céramique (50) comprend des couches multiples d'un matériau de type FR-4.

7. Terminal de communication mobile selon la revendication 5, dans laquelle la carte stratifiée en céramique comprend un matériau de céramique co-cuit basse température formé de feuilles stratifiées de céramique.

8. Terminal de communication mobile selon la revendication 5, dans laquelle la carte stratifiée en céramique comprend un matériau de céramique co-cuit haute température formé de feuilles stratifiées de céramique.

9. Terminal de communication mobile selon la revendication 1, dans laquelle la coiffe (54) est formée par l'un d'un moulage époxy ou d'un blindage métallique.
